(19) **Europäisches Patentamt / European Patent Office / Office européen des brevets**

(11) **EP 4 299 634 B1**

(12) **EUROPEAN PATENT SPECIFICATION**

(45) Date of publication and mention of the grant of the patent:
**04.03.2026 Bulletin 2026/10**

(21) Application number: **22759282.1**

(22) Date of filing: **31.01.2022**

(51) International Patent Classification (IPC):
*C08F 214/26* (2006.01)     *B65D 1/00* (2006.01)
*B65D 65/02* (2006.01)     *C08F 8/00* (2006.01)
*C08J 5/00* (2006.01)     *F16L 11/04* (2006.01)
*H01B 3/44* (2006.01)     *H01B 7/02* (2006.01)
*B29C 48/00* (2019.01)

(52) Cooperative Patent Classification (CPC):
(C-Sets available)
**C09D 127/18; B29C 48/022; C08F 8/22;**
**C08F 214/262; C08J 5/18; H01B 3/445;**
C08J 2327/18; F16L 9/12     (Cont.)

(86) International application number:
**PCT/JP2022/003658**

(87) International publication number:
**WO 2022/181241 (01.09.2022 Gazette 2022/35)**

(54) **COPOLYMER, MOLDED BODY, EXTRUDED BODY, BLOW MOLDED BODY, TRANSFER MOLDED BODY, AND COATED ELECTRICAL WIRE**

COPOLYMER, FORMKÖRPER, EXTRUDIERTER KÖRPER, BLASGEFORMTER KÖRPER, TRANSFERFORMKÖRPER UND BESCHICHTETER ELEKTRISCHER DRAHT

COPOLYMÈRE, CORPS MOULÉ, CORPS EXTRUDÉ, CORPS MOULÉ PAR SOUFFLAGE, CORPS MOULÉ PAR TRANSFERT ET FIL ÉLECTRIQUE ENROBÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 26.02.2021   JP 2021031086
26.02.2021   JP 2021031114
30.09.2021   JP 2021162160

(43) Date of publication of application:
**03.01.2024 Bulletin 2024/01**

(73) Proprietor: **DAIKIN INDUSTRIES, LTD.**
**Osaka-Shi, Osaka 530-0001 (JP)**

(72) Inventors:
• **ISAKA, Tadaharu**
**Osaka-shi, Osaka 530-0001 (JP)**

• **ZENKE, Yumi**
**Osaka-shi, Osaka 530-0001 (JP)**
• **YAMAMOTO, Yukari**
**Osaka-shi, Osaka 530-0001 (JP)**
• **TSUDA, Hayato**
**Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(56) References cited:
WO-A1-2014/007346     WO-A1-2014/007346
JP-A- 2004 534 131     JP-A- 2004 534 131
JP-A- 2009 042 478     JP-A- 2020 015 906
JP-A- H03 247 609     US-A1- 2003 013 791
US-A1- 2015 158 988

(52) Cooperative Patent Classification (CPC): (Cont.)

C-Sets
**C08F 8/22, C08F 214/262;**
**C08F 214/262, C08F 216/1408**

**Description**

TECHNICAL FIELD

The present disclosure relates to a copolymer, a formed article, an extrusion formed article, a blow molded article, a transfer molded article, and a coated electric wire.

BACKGROUND ART

Patent Document 1 describes a formed article comprising a copolymer containing tetrafluoroethylene unit and a perfluoro(alkyl vinyl ether) unit, wherein the surface roughness Ra of the formed article is 0.20 $\mu$m or lower, and the water contact angle of the formed article is 80 degrees or lower. Patent Document 2 discloses copolymers of tetrafluoroethylene (TFE) and a perfluoro(alkyl vinyl ether) (PAVE) for the coating of wires and for the preparation of moulded articles by methods such as extrusion moulding and transfer moulding. Patent Document 3 discloses melt-processable terpolymers comprising units derived from TFE, perfluoro(propyl vinyl ether) and hexafluoropropylene. Extruding into a mould and the coating of the surface of a wire are named as application options. Patent Document 4 discloses copolymers of TFE and a PAVE monomer for the preparation of moulded articles.

RELATED ART

PATENT DOCUMENTS

Patent Document 1: Japanese Patent Laid-Open No. 2020-002341
Patent Document 2: US 2015/158988 A1
Patent Document 3: US 2003/013791 A1
Patent Document 4: JP 2020 015906 A

SUMMARY OF THE INVENTION

PROBLEM TO BE SOLVED BY THE INVENTION

An object of the present disclosure is to provide a copolymer which hardly deforms even in a melt state, enables a remarkably thick coating layer to be formed on a core wire having a remarkably large diameter in a uniform thickness by an extrusion forming method, can be easily formed into films uniform in thickness, is excellent in the abrasion resistance, the oxygen low permeability, the chemical solution low permeability, the creep resistance and the rigidity at a high temperature of 110°C, and hardly makes fluorine ions dissolve out in a chemical solution such as a hydrogen peroxide solution.

MEANS FOR SOLVING THE PROBLEM

According to the present disclosure, there is provided a copolymer containing tetrafluoroethylene unit and perfluoro(propyl vinyl ether) unit, wherein the copolymer has a content of perfluoro(propyl vinyl ether) unit of 3.9 to 5.5% by mass with respect to the whole of the monomer units, a melt flow rate at 372°C of 2.8 to 4.0 g/10 min, and the number of functional groups of 20 or less per $10^6$ main-chain carbon atoms.

According to the present disclosure, an extrusion formed article, a blow molded article, or a transfer molded article comprising the above copolymer is further provided.

According to the present disclosure, a coated electric wire having a coating layer comprising the above copolymer is further provided.

According to the present disclosure, there is provided a formed article containing the above copolymer, wherein the formed article is a piping member, an electric wire coating, a tube, a film, or a member to be compressed.

EFFECTS OF INVENTION

According to the present disclosure, there can be provided a copolymer which hardly deforms even in a melt state, enables a remarkably thick coating layer to be formed on a core wire having a remarkably large diameter in a uniform thickness by an extrusion forming method, can be easily formed into films uniform in thickness, is excellent in the abrasion resistance, the oxygen low permeability, the chemical solution low permeability, the creep resistance and the rigidity at a high temperature of 110°C, and hardly makes fluorine ions dissolve out in a chemical solution such as a hydrogen peroxide solution.

DESCRIPTION OF EMBODIMENTS

Hereinafter, specific embodiments of the present disclosure will be described in detail, but the present disclosure is not limited to the following embodiments.

A copolymer of the present disclosure contains tetrafluoroethylene (TFE) unit and perfluoro(propyl vinyl ether) (PPVE) unit.

The copolymer (PFA) containing TFE unit and PPVE unit is utilized as a material for forming piping members to be used to transfer liquids, such as piping, joints, gaskets, and packings. In particular, PFA lined piping that can be obtained by forming PFA by transfer molding and by lining PFA in a piping having a large diameter is utilized, for example, to transfer corrosive high temperature chemical solutions in chemical plants. Since a large amount of high-temperature liquids flows in such a piping, problems such as abrasion and deformation may occur. However, since excellent formability that allows easy lining is required for PFA used in such a piping, PFA that can impart strength such as creep resistance to lined piping while having excellent formability is required. When PFA is formed by an extrusion forming method to produce piping having a large diameter, the copolymer discharged from an extruder in a melt state easily deforms by its own weight until being cooled and solidified, and therefore, a copolymer that hardly deforms even in a melt state is required.

It has been found that by suitably regulating the content of PPVE unit, the melt flow rate (MFR) and the number of functional groups of the copolymer containing TFE unit and PPVE unit, the formability of the copolymer is significantly improved, and furthermore, formed articles containing such a copolymer exhibit excellent abrasion resistance, oxygen low permeability, chemical solution low permeability, creep resistance and rigidity at a high temperature of 110°C. By using such a copolymer, there can be obtained a lining material that can easily apply lining to piping, suppress the abrasion and deformation due to the contact with a liquid at a high temperature, suppress the oxidation of a liquid, and prevent the diffusion of a chemical solution to the outside. Further, since the copolymer of the present disclosure hardly deforms even in a melt state, a pipe having a high dimensional accuracy and a large diameter can be produced by an extrusion forming method by using the copolymer of the present disclosure.

In addition, the copolymer of the present disclosure formed by an extrusion forming method enables a remarkably thick coating layer to be formed on a core wire having a remarkably large diameter in a uniform thickness, enables a beautiful tube to be obtained, and can be easily formed into a film having a uniform thickness. Thus, the copolymer of the present disclosure can be not only utilized as a material for the piping member, but also utilized in wide applications such as electric wire coatings, tubes, and films.

The copolymer of the present disclosure is a melt-fabricable fluororesin. Being melt-fabricable means that a polymer can be melted and processed by using a conventional processing device such as an extruder or an injection molding machine.

The content of the PPVE unit of the copolymer is, with respect to the whole of the monomer units, 3.9 to 5.5% by mass. The content of the PPVE unit of the copolymer is preferably 4.0% by mass or higher, and more preferably 4.1% by mass or higher, and preferably 5.4% by mass or lower, more preferably 5.3% by mass or lower, still more preferably 5.2% by mass or lower, especially preferably 5.1% by mass or lower, and most preferably 5.0% by mass or lower. Due to that the content of the PPVE unit of the copolymer is in the above range, there can be obtained the formed articles excellent in the abrasion resistance, the oxygen low permeability, the chemical solution low permeability, the creep resistance and the rigidity at a high temperature of 110°C. When the content of the PPVE unit of the copolymer is too small, the abrasion resistance of the formed articles containing the copolymer deteriorates. When the content of the PPVE unit of the copolymer is too large, the oxygen low permeability, creep resistance and rigidity at a high temperature of 110°C of the formed articles containing the copolymer deteriorate.

The content of the TFE unit of the copolymer is, with respect to the whole of the monomer units, preferably 94.5 to 96.1% by mass, more preferably 94.6% by mass or higher, still more preferably 94.7% by mass or higher, further still more preferably 94.8% by mass or higher, especially preferably 94.9% by mass or higher, and most preferably 95.0% by mass or higher, and more preferably 95.9% by mass or lower. Due to that the content of the TFE unit of the copolymer is in the above range, there can be obtained the formed articles excellent in the abrasion resistance, the oxygen low permeability, the chemical solution low permeability, the creep resistance and the rigidity at a high temperature of 110°C. When the content of the TFE unit of the copolymer is too large, the abrasion resistance of the formed articles containing the copolymer may deteriorate. When the content of the TFE unit of the copolymer is too small, the oxygen low permeability, creep resistance and rigidity at a high temperature of 110°C of the formed articles containing the copolymer may deteriorate.

In the present disclosure, the content of each monomer unit in the copolymer is measured by a $^{19}$F-NMR method.

The copolymer can also contain a monomer unit originated from a monomer copolymerizable with TFE and PPVE. In this case, the content of the monomer unit copolymerizable with TFE and PPVE is, with respect to the whole of the monomer units of the copolymer, preferably 0 to 1.6% by mass, more preferably 0.05 to 1.0% by mass and still more preferably 0.1 to 0.7% by mass.

The monomers copolymerizable with TFE and PPVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] (provided that, PPVE is excluded) represented by $CF_2=CF-ORf^1$ wherein $Rf^1$ is a perfluoroalkyl group having 1 to 8 carbon atoms, and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and is more preferably a copolymer consisting only of the TFE unit and the PPVE unit.

The melt flow rate (MFR) of the copolymer is 2.8 to 4.0 g/10 min. The MFR of the copolymer is preferably 2.9 g/10 min, preferably 3.9 g/10 min or lower, and more preferably 3.8 g/10 min. Due to that the MFR of the copolymer is in the above range, the formability of the copolymer is improved, and there can also be obtained the formed articles excellent in the abrasion resistance, the oxygen low permeability, the chemical solution low permeability, the creep resistance and the rigidity at a high temperature of 110°C. When the MFR of the copolymer is too low, it is difficult to obtain formed articles excellent in the oxygen low permeability and the rigidity at a high temperature of 110°C. When the MFR of the copolymer is too high, it is difficult to obtain formed articles excellent in the creep resistance.

Due to that the content of the PPVE unit, the melt flow rate (MFR) and the number of functional groups of the copolymer containing the TFE unit and the PPVE unit are suitably regulated, the copolymer of the present disclosure can be formed by injection molding and can be formed by extrusion forming for electric wire coating. A copolymer that sufficiently flows by heating is suitable for the injection molding method. On the other hand, when a coating layer for an electric wire is tried to be formed by an extrusion forming method by using a copolymer having a too high flowability at high temperatures, the variation of the outer diameter may increase. The copolymer of the present disclosure enables a beautiful injection molded article to be obtained when being formed by injection molding, and also enables a coated electric wire having a small variation of the outer diameter to be obtained when being formed by extrusion forming.

In the present disclosure, the MFR is a value obtained as a mass (g/10 min) of the polymer flowing out from a nozzle of 2.1 mm in inner diameter and 8 mm in length per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

The number of functional groups per $10^6$ main-chain carbon atoms of the copolymer is 20 or less. The number of functional groups per $10^6$ main-chain carbon atoms of the copolymer is preferably 15 or less, more preferably 10 or less, and still more preferably less than 6. Due to that the number of functional groups of the copolymer is in the above range, there can be obtained the formed articles that are excellent in the oxygen low permeability, the chemical solution low permeability and the creep resistance, and hardly make fluorine ions dissolve out in a chemical solution such as a hydrogen peroxide solution.

For identification of the kind of the functional groups and measurement of the number of the functional groups, infrared spectroscopy can be used.

The number of the functional groups is measured, specifically, by the following method. First, the copolymer is formed by cold press to prepare a film of 0.25 to 0.30 mm in thickness. The film is analyzed by Fourier transform infrared spectroscopy to obtain an infrared absorption spectrum of the copolymer, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the copolymer is calculated according to the following formula (A).

$$N = I \times K/t \quad (A)$$

I: absorbance

K: correction factor

t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

Table 1

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of $-CH_2CF_2H$, $-CH_2COF$, $-CH_2COOH$, $-CH_2COOCH_3$ and $-CH_2CONH_2$ are lower by a few tens of kaysers (cm$^{-1}$) than those of $-CF_2H$, -COF, -COOH free and -COOH bonded, $-COOCH_3$ and $-CONH_2$ shown in the Table, respectively.

For example, the number of the functional group -COF is the total of the number of a functional group determined from an absorption peak having an absorption frequency of 1,883 cm$^{-1}$ derived from $-CF_2COF$ and the number of a functional group determined from an absorption peak having an absorption frequency of 1,840 cm$^{-1}$ derived from $-CH_2COF$.

The functional groups are ones present on main chain terminals or side chain terminals of the copolymer, and ones present in the main chain or the side chains. The number of the functional groups may be the total of numbers of $-CF=CF_2$, $-CF_2H$, -COF, -COOH, $-COOCH_3$, $-CONH_2$ and $-CH_2OH$.

The functional groups are introduced to the copolymer by, for example, a chain transfer agent or a polymerization initiator used for production of the copolymer. For example, in the case of using an alcohol as the chain transfer agent, or a peroxide having a structure of $-CH_2OH$ as the polymerization initiator, $-CH_2OH$ is introduced on the main chain terminals of the copolymer. Alternatively, the functional group is introduced on the side chain terminal of the copolymer by polymerizing a monomer having the functional group.

The copolymer satisfying the above range regarding the number of functional groups can be obtained by subjecting the copolymer to a fluorination treatment. That is, the copolymer of the present disclosure is preferably one which is subjected to the fluorination treatment. Further, the copolymer of the present disclosure preferably has $-CF_3$ terminal groups.

The melting point of the copolymer is preferably 295 to 315°C, more preferably 298°C or higher, still more preferably 300°C or higher, and especially preferably 301°C or higher, more preferably 310°C or lower, and still more preferably 305°C or lower. Due to that the melting point is in the above range, there can be obtained the copolymer giving formed articles which are better in the abrasion resistance, the oxygen low permeability, the chemical solution low permeability, the creep resistance and the rigidity at a high temperature of 110°C.

In the present disclosure, the melting point can be measured by using a differential scanning calorimeter [DSC].

The oxygen permeation coefficient of the copolymer is preferably 970 cm$^3$·mm/ (m$^2$·24h·atm) or lower. Due to that the content of the PPVE unit, the melt flow rate (MFR) and the number of functional groups of the copolymer containing the TFE unit and the PPVE unit are suitably regulated, the copolymer of the present disclosure has an excellent oxygen low permeability. Hence, due to that oxygen hardly permeates the formed article formed by the copolymer, for example, the piping member obtained by using the copolymer of the present disclosure can be suitably used to transfer a chemical solution that is required to avoid oxidation.

In the present disclosure, the oxygen permeation coefficient can be measured under the condition of a test temperature of 70°C and a test humidity of 0% RH. Specific measurement of the oxygen permeation coefficient can be carried out by a method described in Examples.

The ethyl acetate permeability of the copolymer is preferably 7.4 g·cm/m$^2$ or lower, and more preferably 7.0 g·cm/m$^2$ or lower. Due to that the content of the PPVE unit, the melt flow rate (MFR) and the number of functional groups of the copolymer containing the TFE unit and the PPVE unit are suitably regulated, the copolymer of the present disclosure has an excellent ethyl acetate low permeability. That is, by using the copolymer of the present disclosure, a formed article that hardly allows a chemical solution such as ethyl acetate to permeate can be obtained.

In the present disclosure, the ethyl acetate permeability can be measured under the condition of a temperature of 60°C and for 45 days. Specific measurement of the ethyl acetate permeability can be carried out by a method described in Examples.

The copolymer of the present disclosure can be produced by a polymerization method such as suspension polymerization, solution polymerization, emulsion polymerization or bulk polymerization. The polymerization method is preferably emulsion polymerization or suspension polymerization. In these polymerization methods, conditions such as temperature and pressure, and a polymerization initiator and other additives can suitably be set depending on the formulation and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by $[(RfCOO)-]_2$ wherein Rf is a perfluoroalkyl group, an $\omega$-hydroperfluoroalkyl group or a fluorochloroalkyl group.

Examples of the di[fluoro(or fluorochloro)acyl] peroxides include di($\omega$-hydro-dodecafluorohexanoyl) peroxide, di($\omega$-hydro-tetradecafluoroheptanoyl) peroxide, di($\omega$-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di($\omega$-chloro-hexafluorobutyryl) peroxide, di($\omega$-chloro-decafluorohexanoyl) peroxide, di($\omega$-chloro-tetradecafluorooctanoyl) peroxide, $\omega$-hydro-dodecafluoroheptanoyl-$\omega$-hydrohexadecafluorononanoyl peroxide, $\omega$-chloro-hexafluorobutyryl-$\omega$-chloro-decafluorohexanoyl peroxide, $\omega$-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide and di(undecachlorotriacontafluorodocosanoyl) peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, for example, nonionic surfactants, anionic surfactants and cationic surfactants may be used. Among these, fluorine-containing anionic surfactants are preferred, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to water in the polymerization) is preferably 50 to 5,000 ppm.

Examples of the chain transfer agent include hydrocarbons such as ethane, isopentane, n-hexane and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride and methyl chloride. The amount of the chain transfer agent to be added may vary depending on the chain transfer constant value of the compound to be used, but is usually in the range of 0.01 to 20% by mass with respect to the solvent in the polymerization.

The solvent may include water and mixed solvents of water and an alcohol.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalkanes such as $CF_2ClCFClCF_2CF_3$ and $CF_3CFClCFClCF_3$; hydrofluoroalkanes such as $CF_3CFHCFHCF_2CF_2CF_3$, $CF_2HCF_2CF_2CF_2CF_2H$ and $CF_3CF_2CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_2CF_3$, and among these, perfluoroalkanes are preferred. The amount of the fluorosolvent to be used is, from the viewpoint of the suspensibility and the economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, cleaning and drying the copolymer contained in the aqueous dispersion. Then in the case of obtaining the copolymer as a slurry by the polymerization reaction, the copolymer can be recovered by taking out the slurry from a reaction container, and cleaning and drying the slurry. The copolymer can be recovered in a shape of powder by the drying.

The copolymer obtained by the polymerization may be formed into pellets. A method of forming into pellets is not limited, and a conventionally known method can be used.

Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably the melting point of the copolymer + 20°C to the melting point of the copolymer + 140°C. A method of cutting the copolymer is not limited, and there can be adopted a conventionally known method such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water of 30 to 200°C, steam of 100 to 200°C or hot air of 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, -COOCH$_3$, -CH$_2$OH, -COF, -CF=CF$_2$ and -CONH$_2$, and thermally relatively stable functional groups thereof, such as -CF$_2$H, can be converted to thermally very stable -CF$_3$. Consequently, the total number (number of functional groups) of -COOH, -COOCH$_3$, -CH$_2$OH, -COF, -CF=CF$_2$, - CONH$_2$ and -CF$_2$H of the copolymer can easily be controlled in the above-mentioned range.

The fluorine-containing compound is not limited, but includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF, halogen fluorides (for example, IF$_5$ and ClF$_3$) .

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas includes nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas (F$_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

As the above-mentioned other components, other polymers other than the copolymer may be used. The other polymers include fluororesins other than the copolymer, fluoroelastomer, and non-fluorinated polymers.

A method of producing the composition includes a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, but use as a forming material is suitable. There can also be utilized aqueous dispersions, solutions and suspensions of the copolymer of the present disclosure, and the copolymer/solvent-based materials; and these can be used for application of coating materials, encapsulation, impregnation, and casting of films. However, since the copolymer of the present disclosure has the above-mentioned properties, it is preferable to use the copolymer as the forming material.

Formed articles may be obtained by forming the copolymer of the present disclosure or the above composition.

A method of forming the copolymer or the composition is not limited, and includes compression molding, transfer molding, extrusion forming, blow molding, rotomolding and rotolining molding. As the forming method, among these, preferable are compression molding, extrusion forming, transfer molding or blow molding, more preferable are extrusion forming, transfer molding or blow molding, and still more preferable is blow molding. That is, it is preferable that formed articles are compression molded articles, extrusion formed articles, transfer molded articles or blow molded articles, and transfer molded articles or blow molded articles are more preferable.

The formed articles containing the copolymer of the present disclosure may be, for example, nuts, bolts, joints, films, bottles, gaskets, electric wire coatings, tubes, hoses, pipes, valves, sheets, seals, packings, tanks, rollers, containers, cocks, connectors, filter housings, filter cages, flowmeters, pumps, wafer carrier, or wafer boxes.

The copolymer of the present disclosure, the above composition and the above formed articles can be used, for example, in the following applications.

Food packaging films, and members for liquid transfer for food production apparatuses, such as lining materials of liquid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes;

inner surface lining materials of chemical solution tanks and piping of chemical plants and semiconductor factories;

members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks;

members for food and beverage transfer, such as tubes, hoses, belts, packings and joints for food and beverage, food packaging materials, and members for glass cooking appliances;

members for waste liquid transport, such as tubes and hoses for waste liquid transport;

members for high-temperature liquid transport, such as tubes and hoses for high-temperature liquid transport;

members for steam piping, such as tubes and hoses for steam piping;

corrosionproof tapes for piping, such as tapes wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses and evap hoses. The above fuel transfer members can also be used as fuel transfer members for gasoline additive-containing fuels, resultant to sour gasoline, resultant to alcohols, and resultant to methyl tertiary butyl ether and amines and the like.

The above chemical stoppers and packaging films for chemicals have excellent chemical resistance to acids and the like. The above chemical solution transfer members also include corrosionproof tapes wound on chemical plant pipes.

The above formed articles also include vehicular radiator tanks, chemical solution tanks, bellows, spacers, rollers and gasoline tanks, waste liquid transport containers, high-temperature liquid transport containers and fishery and fish farming tanks.

The above formed articles further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed articles containing the copolymer of the present disclosure are excellent in the abrasion resistance, the oxygen low permeability, the chemical solution low permeability, the creep resistance and the 110°C high temperature rigidity, and hardly makes fluorine ions dissolve out in a chemical solution such as a hydrogen peroxide solution, the formed articles can suitably be utilized for nuts, bolts, joints, packings, valves, cocks, connectors, filter housings, filter cages, filter cages, flowmeters, pumps, and the like.

Due to that the formed articles containing the copolymer of the present disclosure are excellent in the abrasion resistance, the oxygen low permeability, the chemical solution low permeability, the creep resistance and the rigidity at a high temperature of 110°C, and hardly makes fluorine ions dissolve out in a chemical solution such as a hydrogen peroxide solution, the formed articles can suitably be utilized as members to be compressed such as gaskets and packings.

The members to be compressed of the present disclosure have excellent creep resistance. The members to be compressed of the present disclosure can be used in a state of being compressed at a compression deformation rate of 10% or higher, and can be used in a state of being compressed at a compression deformation rate of 20% or higher or 25% or higher. By using the members to be compressed of the present disclosure by being deformed at such a high compression deformation rate, a certain rebound resilience can be retained for a long term and the sealing property and the insulating property can be retained for a long term.

The members to be compressed of the present disclosure, even when being used at a high temperature, exhibit excellent creep resistance. The members to be compressed of the present disclosure can be used at 80°C or higher and in a state of being compression deformed at a compression deformation rate of 10% or higher, and can be used at 80°C or higher and in a state of being compression deformed at a compression deformation rate of 20% or higher or 25% or higher. By using the members to be compressed of the present disclosure by being deformed at such a high temperature and at such a high compression deformation rate, a certain rebound resilience can be retained also at high temperatures for a long term and the sealing property and the insulating property at high temperatures can be retained for a long term.

In the case where the members to be compressed are used in a state of being compressed, the compression deformation rate is a compression deformation rate of a portion having the highest compression deformation rate. For example, in the case where a flat member to be compressed is used in a state of being compressed in the thickness direction, the compression deformation rate is that in the thickness direction. Further for example, in the case where a member to be compressed is used with only some portions of the member in a state of being compressed, the compression deformation rate is that of a portion having the highest compression deformation rate among compression deformation rates of the compressed portions.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptic shape, a corner-rounded square or the like, and may be a shape having a throughhole in the central portion thereof.

It is preferable that the members to be compressed of the present disclosure are used as members constituting non-aqueous electrolyte batteries. The members to be compressed of the present disclosure may also be ones having a liquid-contact surface with a non-aqueous electrolyte in the non-aqueous electrolyte batteries.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, $\gamma$-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, but may be $LiClO_4$, $LiAsF_6$, $LiPF_6$, $LiBF_4$, LiCl, LiBr, $CH_3SO_3Li$, $CF_3SO_3Li$, cesium carbonate and the like.

The members to be compressed of the present disclosure can suitably be utilized, for example, as sealing members such as sealing gaskets and sealing packings, and insulating members such as insulating gaskets and insulating packings. The sealing members are members to be used for preventing leakage of a liquid or a gas, or penetration of a liquid or a gas from the outside. The insulating members are members to be used for insulating electricity. The members to be compressed of the present disclosure may also be members to be used for the purpose of both of sealing and insulation.

Due to that the members to be compressed of the present disclosure exhibit excellent creep resistance, even when being used at a high temperature, the members can suitably be used under an environment of becoming high temperatures. It is suitable for the members to be compressed of the present disclosure to be used, for example, in an environment where the maximum temperature becomes 40°C or higher. It is suitable for the members to be compressed of the present disclosure to be used, for example, in an environment where the maximum temperature becomes 80°C or higher. Examples of the case where the temperature of the members to be compressed of the present disclosure may become such high temperatures include the case where after a member to be compressed is installed in a state of being compressed to a battery, other battery members are installed to the battery by welding, and the case where a non-aqueous electrolyte battery generates heat.

Due to that the members to be compressed of the present disclosure exhibit excellent creep resistance, even when being used at a high temperature, the members can suitably be used as sealing members for non-aqueous electrolyte batteries or insulating members for non-aqueous electrolyte batteries. For example, in the charge time of batteries such as non-aqueous electrolyte secondary batteries, the temperature of the batteries temporarily becomes 40°C or higher, specially temporarily becomes 80°C or higher in some cases. Even when the members to be compressed of the present disclosure are used by being deformed at high temperatures and at a high compression deformation rate, and moreover are brought into contact with non-aqueous electrolytes at high temperatures, in batteries such as non-aqueous electrolyte batteries, a high rebound resilience is not impaired. Therefore, the members to be compressed of the present disclosure, in the case of being used as sealing members, have the excellent sealing property and also at high temperatures, retain the sealing property for a long term. Further, the members to be compressed of the present disclosure, due to containing the above copolymer, have the excellent insulating property. Therefore, in the case of using the members to be compressed of the present disclosure as insulating members, the member firmly adhere to two or more electrically conductive members and prevent short circuit over a long term.

Due to that the copolymer of the present disclosure formed by an extrusion forming method enables a thick coating layer to be formed on a core wire having a remarkably large diameter in a uniform thickness, the copolymer can be suitably utilized as a material for forming electric wire coatings. Due to that the coated electric wire having a coating layer comprising the copolymer of the present disclosure has almost no variation in the outer diameter, the coated electric wire is excellent in the electric property.

When a thick coating layer is tried to be formed on a core wire having a remarkably large diameter in a uniform thickness, it requires time until the coating layer in a melt state solidifies and the weight of the coating layer is large. Hence, when a conventional copolymer is used, there are problems in that the coating layer deforms by its own weight before solidification and a coating layer in a uniform thickness may be difficult to be formed. By using the copolymer of the present disclosure, a thick coating layer can be formed in a uniform thickness.

The coated electric wire has a core wire, and the coating layer installed on the periphery of the core wire and containing the copolymer of the present disclosure. For example, an extrusion formed article made by melt extruding the copolymer in the present disclosure on a core wire can be made into the coating layer. The coated electric wire is suitable for LAN cables (Eathernet Cables), high-frequency transmission cables, flat cables, heat resistant cables, and the like, and among them, it is suitable for transmission cables such as LAN cables (Eathernet Cables) and high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferably 2 mm or smaller.

With regard to specific examples of the core wire, there may be used, for example, AWG (American Wire Gauge)-46 (solid copper wire of 40 $\mu$m in diameter), AWG-26 (solid copper wire of 404 $\mu$m in diameter), AWG-24 (solid copper wire of 510 $\mu$m in diameter), and AWG-22 (solid copper wire of 635 $\mu$m in diameter).

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, but is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferably 25 $\mu$m or smaller and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a melt state on the core wire to thereby form the coating layer.

In formation of a coating layer, by heating the copolymer and introducing a gas in the copolymer in a melt state, the coating layer containing cells can be formed. As the gas, there can be used, for example, a gas such as chlorodifluoromethane, nitrogen or carbon dioxide, or a mixture thereof. The gas may be introduced as a pressurized gas in the heated copolymer, or may be generated by mingling a chemical foaming agent in the copolymer. The gas dissolves in the copolymer in a melt state.

The copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that the good electric property is provided. The printed wiring boards are not limited, but examples thereof include printed wiring boards of electronic circuits for cell phones, various computers, communication devices and the like. As the (2) formed articles, antenna covers are preferable in that the dielectric loss is low.

The copolymer of the present disclosure can easily be formed into films uniform in thickness by forming the copolymer by an extrusion forming method. The formed articles containing the copolymer of the present disclosure can suitably be utilized as films or sheets.

The films of the present disclosure are useful as release films. The release films can be produced by forming the copolymer of the present disclosure by melt extrusion forming, calendering, press molding, casting or the like. From the viewpoint that uniform thin films can be obtained, the release films can be produced by melt extrusion forming.

The films of the present disclosure can be applied to the surface of rolls used in OA devices. The copolymer of the present disclosure is formed into needed shapes by extrusion forming, compression molding, press molding or the like to be formed into sheet-shapes, filmy shapes or tubular shapes, and can be used as surface materials for OA device rolls, OA device belts or the like. Thin-wall tubes and films can be produced particularly by a melt extrusion forming method.

Due to that the formed articles containing the copolymer of the present disclosure are excellent in the abrasion resistance, the oxygen low permeability, the chemical solution low permeability, the creep resistance and the rigidity at a high temperature of 110°C, and hardly makes fluorine ions dissolve out in a chemical solution such as a hydrogen peroxide solution, the formed articles can suitably be utilized as bottles or tubes. The copolymer of the present disclosure can easily be formed into hollow formed articles by blow molding. Therefore, it is also preferable that the formed articles containing the copolymer of the present disclosure are blow molded articles or blow bottles.

Although the embodiments have been described above, it will be understood that various changes in form and details are possible without departing from the gist and scope of the claims.

EXAMPLES

Next, embodiments of the present disclosure will be described with reference to examples, but the present disclosure is not intended to be limited by these examples.

Each numerical values of the Examples were measured by the following methods.

(Content of a monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle of 2.1 mm in inner diameter and 8 mm in length at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was formed by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the sample was calculated according to the following formula (A).

$$N = I \times K/t \quad (A)$$

I: absorbance

K: correction factor

t: thickness of film (mm)

Regarding the functional groups in the present disclosure, for reference, the absorption frequency, the molar absorption coefficient and the correction factor are shown in Table 2. The molar absorption coefficients are those determined from FT-IR measurement data of low molecular model compounds.

[Table 2]

Table 2

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corp.); and the melting point was determined from a melting curve peak observed in the second temperature raising step.

Comparative Example 1

51.8 L of pure water was charged in a 174 L-volume autoclave; nitrogen replacement was sufficiently carried out; thereafter, 40.9 kg of perfluorocyclobutane, 2.43 kg of perfluoro(propyl vinyl ether) (PPVE) and 0.84 kg of methanol were charged; and the temperature in the system was held at 35°C and the stirring speed was held at 200 rpm. Then, tetrafluoroethylene (TFE) was introduced under pressure up to 0.64 MPa, and thereafter 0.026 kg of a 50% methanol solution of di-n-propyl peroxydicarbonate was charged to initiate polymerization. Since the pressure in the system decreased along with the progress of the polymerization, TFE was continuously supplied to make the pressure constant, and 0.053 kg of PPVE was additionally charged for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 43.1 kg of a powder.

The obtained powder was melt extruded at 360°C by a screw extruder (trade name: PCM46, manufactured by Ikegai Corp.) to thereby obtain pellets of a TFE/PPVE copolymer. By using the obtained pellets, the PPVE content was measured by the above-mentioned method.

The obtained pellets were put in a vacuum vibration-type reactor VVD-30 (manufactured by Okawara MFG. Co., Ltd.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and the $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 210°C for 10 hours. After the reaction was finished, the reactor interior was replaced sufficiently by $N_2$ gas to finish the fluorination reaction. By using the fluorinated pellets, the above physical properties were measured by the methods described above.

Comparative Example 2

Non-fluorinated pellets were obtained as in Comparative Example 1, except for changing the charged amount of PPVE to 2.37 kg, changing the charged amount of methanol to 2.79 kg, and adding 0.052 kg of PPVE for every 1 kg of TFE supplied, to thereby obtain 43.0 kg of a powder.

Comparative Example 3

Fluorinated pellets were obtained as in Comparative Example 1, except for changing the charged amount of PPVE to 2.53 kg, changing the charged amount of methanol to 3.42 kg, and adding 0.055 kg of PPVE for every 1 kg of TFE supplied, to thereby obtain 41.0 kg of a powder.

Comparative Example 4

Fluorinated pellets were obtained as in Comparative Example 1, except for changing the charged amount of PPVE to 1.53 kg, changing the charged amount of methanol to 4.55 kg, and adding 0.037 kg of PPVE for every 1 kg of TFE supplied, to thereby obtain 42.4 kg of a powder.

Comparative Example 5

Fluorinated pellets were obtained as in Comparative Example 1, except for changing the charged amount of PPVE to 3.21 kg, changing the charged amount of methanol to 0.62 kg, and adding 0.066 kg of PPVE for every 1 kg of TFE supplied, to thereby obtain 43.6 kg of a powder.

Example 1

Fluorinated pellets were obtained as in Comparative Example 1, except for changing the charged amount of PPVE to 1.85 kg, changing the charged amount of methanol to 3.10 kg, and adding 0.043 kg of PPVE for every 1 kg of TFE supplied, to thereby obtain 42.6 kg of a powder.

Example 2

Fluorinated pellets were obtained as in Comparative Example 1, except for changing the charged amount of PPVE to 2.05 kg, changing the charged amount of methanol to 2.80 kg, and adding 0.046 kg of PPVE for every 1 kg of TFE supplied, to thereby obtain 42.8 kg of a powder.

Example 3

Fluorinated pellets were obtained as in Comparative Example 1, except for changing the charged amount of PPVE to 2.24 kg, changing the charged amount of methanol to 2.72 kg, and adding 0.049 kg of PPVE for every 1 kg of TFE supplied, to thereby obtain 42.9 kg of a powder.

Example 4

Fluorinated pellets were obtained as in Comparative Example 1, except for changing the charged amount of PPVE to 2.43 kg, changing the charged amount of methanol to 2.63 kg, and adding 0.053 kg of PPVE for every 1 kg of TFE supplied, to thereby obtain 43.1 kg of a powder.
By using the pellets obtained in Examples and Comparative Examples, the above physical properties were measured by the methods described above. The results are shown in Table 3.

[Table 3]

Table 3

| | PPVE content (% by mass) | MFR (g/10 min) | Number of functional groups (number/C10$^6$) | Melting point (°C) |
|---|---|---|---|---|
| Comparative Example 1 | 5.0 | 2.3 | < 6 | 301 |
| Comparative Example 2 | 4.9 | 3.6 | 113 | 301 |
| Comparative Example 3 | 5.2 | 5.0 | < 6 | 302 |
| Comparative Example 4 | 3.6 | 3.6 | < 6 | 305 |
| Comparative Example 5 | 6.2 | 3.5 | < 6 | 299 |
| Example 1 | 4.1 | 2.9 | < 6 | 303 |
| Example 2 | 4.4 | 3.0 | < 6 | 302 |
| Example 3 | 4.7 | 3.4 | < 6 | 302 |
| Example 4 | 5.0 | 3.8 | < 6 | 301 |

The description of "<6" in Table 3 means that the number of functional groups is less than 6.
Then, by using the obtained pellets, the following properties were evaluated. The results are shown in Table 4.

(Abrasion test)

By using the pellets and a heat press molding machine, a sheet-shape test piece of approximately 0.2 mm in thickness was prepared, and this was cut out into a test piece of 10 cm × 10 cm. The prepared test piece was fixed on a test bench of a Taber abrasion tester (No. 101 Taber type abrasion tester with an option, manufactured by YASUDA SEIKI SEISAKUSHO, LTD.) and the abrasion test was carried out under the conditions of at a temperature of 25°C and a load of 500 g, using an abrasion wheel CS-10 (rotationally polished in 20 rotations with an abrasive paper #240) and at a rotation rate of 60 rpm by using the Taber abrasion tester. The weight of the test piece after 1,000 rotations was measured, and the same test piece was further subjected to the test of 10,000 rotations and thereafter, the weight thereof was measured. The abrasion loss was determined by the following formula.

$$\mathtt{Abrasion\ loss\ (mg)\ =\ M1\ -\ M2}$$

M1: the weight of the test piece after the 1,000 rotations (mg)
M2: the weight of the test piece after the 10,000 rotations (mg)

(Oxygen permeation coefficient)

By using the pellets and a heat press molding machine, a sheet-shape test piece of approximately 0.1 mm in thickness was prepared. Using the obtained test piece, the measurement of the oxygen permeability was carried out according to a method described in JIS K7126-1:2006 by using a differential gas permeability tester (L100-5000 gas permeability tester, manufactured by Systech illinois). The numerical values of the oxygen permeability was obtained with a permeation area of 50.24 $cm^2$, at a test temperature of 70°C, and at a test humidity of 0% RH. The oxygen permeation coefficient was calculated by using the obtained oxygen permeability and the test piece thickness by the following formula.

Oxygen permeation coefficient ($cm^3$·mm/ ($m^2$·24h·atm)) = GTR × d

GTR: oxygen permeability ($cm^3$/ ($m^2$·24h·atm) )
d: test piece thickness (mm)

(Ethyl acetate permeability)

By using the pellets and a heat press molding machine, a sheet-shape test piece of approximately 0.1 mm in thickness was prepared. 10 g of ethyl acetate was put in a test cup (permeation area: 12.56 $cm^2$), and the test cup was covered with the sheet-shape test piece; and a PTFE gasket was pinched and fastened to hermetically close the test cup. The sheet-shape test piece was brought into contact with the ethyl acetate, and held at a temperature of 60°C for 45 days, and thereafter, the test cup was taken out and allowed to stand at room temperature for 1 hour; thereafter, the amount of the mass lost was measured. The ethyl acetate permeability (g·cm/$m^2$) was determined by the following formula.

Ethyl acetate (g·cm/$m^2$) = the amount of the mass lost (g) × the thickness of the sheet-shape test piece (cm) / the permeation area ($m^2$)

(Evaluation of creep resistance)

The measurement of the creep resistance was carried out according to a method described in ASTM D395 or JIS K6262:2013. A molded article of 13 mm in outer diameter and approximately 8 mm in height was prepared by using the pellets and a heat press molding machine. The obtained molded article was cut to prepare a test piece of 13 mm in outer diameter and 6 mm in height. The prepared test piece was compressed by using a compression device at ambient temperature to a compression deformation rate of 25%. The compressed test piece fixed on the compression device was allowed to stand still in an electric furnace at 80°C for 72 hours. The compression device was taken out from the electric furnace, and cooled to room temperature; thereafter, the test piece was dismounted. The collected test piece was allowed to stand at room temperature for 30 min, and the height of the collected test piece was measured and the proportion of recovery was determined by the following formula.

$$\text{Proportion of recovery (\%)} = (t_2 - t_1)/t_3 \times 100$$

$t_1$: the height of a spacer (mm)
$t_2$: the height of the test piece dismounted from the compression device (mm)
$t_3$: the height (mm) after being compressively deformed

In the above test, $t_1$ was 4.5 mm and $t_3$ was 1.5 mm.

(Load deflection rate at 110°C)

By using the pellets and a heat press molding machine, a sheet-shape test piece of approximately 4.2 mm in thickness was prepared, this was cut out into a test piece of 80 × 10 mm, which was heated in an electric furnace at 100°C for 20 hours. Except for using the obtained test piece, the test was carried out according to a method described in JIS K-K 7191-1 using a heat distortion tester (manufactured by YASUDA SEIKI SEISAKUSHO, LTD.) under the conditions of at a test temperature of 30 to 150°C, a temperature-increasing rate of 120°C/hour, a bending stress of 1.8 MPa and a flatwise method. The load deflection rate was determined by the following formula. A sheet having a low load deflection rate at 110°C is excellent in the rigidity at a high temperature of 110°C.

$$\text{Load deflection rate (\%)} = a2/a1 \times 100$$

a1: the test piece thickness before test (mm)
a2: the amount of deflection at 110°C (mm)

(Extrusion pressure)

The extrusion pressure was measured by using a twin capillary rheometer RHEOGRAPH 25 (manufactured by Goettfert Inc.). There was defined as the extrusion pressure, a pressure value obtained by subjecting, to the Bagley correction, a pressure value in the cylinder after extrusion was carried out by using a main die of 1 mm in inner diameter and 16 in L/D and a sub-die of 1 mm in diameter and lower than 1 in L/D and at a measurement temperature of 390°C, a preheating time after charge of the pellets of 10 min and a shear rate of 20 sec$^{-1}$ for 10 min. A copolymer low in the extrusion pressure is excellent in formability such as extrudability and injection moldability.

(Test of own weight deformation in melting)

A molded article of 13 mm in diameter and approximately 6.5 mm in height was prepared by using the pellets and a heat press molding machine. The obtained molded article was cut to prepare a test piece of 6.3 mm in height. The prepared test piece was put in a SUS-made laboratory disk, and heated in an electric furnace at 330°C for 30 min, and thereafter, the test piece together with the laboratory disk was water cooled. There was measured by slide calibers, the diameter of the surface (bottom surface) of the test piece taken out which surface had contacted with the laboratory disk, and the bottom surface area increase rate was calculated by the following formula.

Bottom surface area increase rate (%) = {the bottom area of the test piece after the heating (mm$^2$) - the bottom area of the test piece before the heating (mm$^2$) }/the bottom area of the test piece before the heating (mm$^2$) $\times$ 100

It is meant that the lower the bottom surface area increase rate, the more hardly the molded article deforms by its own weight in melting. The copolymer giving formed articles low in the bottom surface area increase rate is excellent in that even in the case of preparing thick sheets and large pipes by forming the copolymer by an extrusion forming method, the formed articles in a melt state hardly deform and there can be obtained the formed articles having the desired shapes after being cooled and solidified.

(Hydrogen peroxide solution immersion test)

25 g of pellets were immersed in 50 g of a 3% by weight aqueous hydrogen peroxide solution, heated in an electric furnace at 90°C for 20 hours, further heated in a sterilization machine at 121°C for 1 hour, and thereafter cooled to room temperature. The pellets were taken out from the aqueous solution, a TISAB solution (10) (manufactured by Kanto Chemical Co., Inc.) was added to the remaining aqueous solution, and the fluorine ion concentration in the obtained aqueous solution was measured by a fluorine ion meter. The fluorine ion concentration (the amount of fluorine ions dissolved) per pellet weight was calculated from the obtained measured value according to the following formula.

The amount of fluorine ions dissolved (ppm by mass) = measured value (ppm by mass) $\times$ the amount of the aqueous solution (g)/pellet weight (g) [0137] (Film formability)

Pellets were formed into a film by using a $\varphi$14-mm extruder (manufactured by Imoto machinery Co., LTD) and a T die. The extrusion conditions were as follows.

a) Take-up speed: 0.4 m/min
b) Roll temperature: 120°C
c) Film width: 70 mm
d) Thickness: 0.25 mm
e) Extrusion condition:

    · Cylinder screw diameter = 14 mm, a single screw extruder of L/D = 20
    Set temperature of the extruder: barrel section C-1 (330°C), barrel section C-2 (350°C), barrel section C-3 (370°C), T die section (380°C)

Extrusion forming of the copolymer was continuously conducted until the copolymer was stably extruded from the extruder. Subsequently, the copolymer was extrusion formed to prepare a film (width 70 mm) of 5 m or more in length so that the thickness was 0.25 mm. A portion 4 to 5 m from the end of the obtained film was cut to prepare a test piece (1 m in length and 70 mm in width) for measuring the variation of thickness. The thicknesses of three points in total of the central point in the width direction on the end of the prepared film and two points 25 mm apart from the central point in the width direction were measured. Furthermore, the thicknesses of nine points in total of three central points arranged at intervals of 25 cm from the central point in the width direction on the end of the film to the other end, and two points 25 mm apart from each central point in the width direction were measured. Among 12 measured values in total, the case where the number of measured values out of the range of 0.25 mm ±10% was 1 or less was evaluated as good, and the case where the number of measured values out of the range of 0.25 mm ±10% was 2 or more was evaluated as poor.

(Electric wire coating test)

Extrusion coating of the copolymer in the following coating thickness was carried out on a copper conductor of 1.00 mm in conductor diameter by using a 30-mmφ electric wire coating forming machine (manufactured by Tanabe Plastics Machinery Co., Ltd.), to thereby obtain a coated electric wire. The extrusion conditions for the electric wire coating were as follows.

    a) Core conductor: 1.00 mm in conductor diameter
    b) Coating thickness: 0.50 mm
    c) Coated electric wire diameter: 2.00 mm
    d) Electric wire take-over speed: 7 m/min
    e) Extrusion condition:

· Cylinder screw diameter = 20 mm, a single screw extruder of L/D = 22 · Die (inner diameter)/tip (outer diameter) = 30.0 mm/10.0 mm Set temperature of the extruder: barrel section C-1 (330°C), barrel section C-2 (360°C), barrel section C-3 (375°C), head section H (390°C), die section D-1 (405°C), die section D-2 (395°C). Set temperature for preheating core wire: 80°C

(Variation of outer diameter)

The outer diameter of the obtained coated electric wire was continuously measured for 1 hour using an outer diameter measuring device (ODAC18XY manufactured by ZUMBACH Electronic AG). The variation value of the outer diameter was determined by rounding off the outer diameter value most deviated from a predetermined outer diameter value (2.00 mm) among the measured outer diameter values to two decimal places. The proportion of the absolute value of the difference between the predetermined outer diameter and the variation value of the outer diameter to the predetermined outer diameter (2.00 mm) (the variation rate of the outer diameter) was calculated, and evaluated according to the following criteria.

(The variation rate of the outer diameter (%)) = I (the variation value of the outer diameter) - (predetermined outer diameter) I/(predetermined outer diameter) × 100

    ±1%: the variation rate of the outer diameter is 1% or lower
    ±2%: the variation rate of the outer diameter is higher than 1% and 2% or lower
    Poor: the variation rate of the outer diameter is higher than 2%

(Tube formability)

By extrusion forming the pellets using a φ30-mm extruder (manufactured by Tanabe Plastics Machinery Co., Ltd.), a tube of 10.0 mm in outer diameter and 1.0 mm in wall thickness was obtained. The extrusion conditions were as follows.

    a) Die inner diameter: 25 mm
    b) Mandrel outer diameter: 13 mm

c) Sizing die inner diameter: 10.5 mm
d) Take-over speed: 0.4 m/min
e) Outer diameter: 10.0 mm
f) Wall thickness: 1.0 mm
g) Extrusion condition · Cylinder screw diameter = 30 mm, a single screw extruder of L/D = 22

Set temperature of the extruder: barrel section C-1 (350°C), barrel section C-2 (370°C), barrel section C-3 (380°C), head section H-1 (390°C), die section D-1 (390°C), die section D-2 (390°C)

The obtained tube was observed and evaluated according to the following criteria. The appearance of the tube was visually checked.

Good: the appearance is good
Poor: the appearance is poor, for example, the cross section is not a circular shape but flat, or thickness deviation is observed

(Dielectric loss tangent)

By melt forming the pellets, a cylindrical test piece of 2 mm in diameter was prepared. The prepared test piece was set in a cavity resonator for 6 GHz, manufactured by KANTO Electronic Application and Development Inc., and the dielectric loss tangent was measured by a network analyzer, manufactured by Agilent Technologies Inc. By analyzing the measurement result by analysis software "CPMA", manufactured by KANTO Electronic Application and Development Inc., on PC connected to the network analyzer, the dielectric loss tangent ($\tan\delta$) at 20°C at 6 GHz was determined.

[Table 4]

Table 4

| | Abrasion loss (mg) | Oxygen permeation coefficient cm³·mm /(m²·24h·atm} | Ethyl acetate permeability (g·cm/m²) | Evaluation of creep resistance Proportion of recovery (%) | Load deflection rate at 110°C (%) | Extrusion pressure (kPa) | Test of own weight deformation (%) | Hydrogen peroxide solution immersion test Amount of fluorine ions dissolved (ppm by mass) | Film formability | Electric wire coating test Variation of outer diameter | Tube formability | Dielectric tangent |
|---|---|---|---|---|---|---|---|---|---|---|---|---|
| Comparative Example 1 | 11.5 | 1013 | 6.9 | 27% | 78% | 120 | 49 | 2.1 | Good | Poor | - | 0.00040 |
| Comparative Example 2 | 12.2 | 1040 | 8.0 | 23% | 75% | 88 | 74 | 9.2 | Good | ±2% | - | 0.00066 |
| Comparative Example 3 | 12.6 | 947 | 6.7 | 24% | 75% | 70 | 97 | 2.2 | Poor | ±1% | - | 0.00040 |
| Comparative Example 4 | 13.3 | 834 | 7.0 | 33% | 70% | 88 | 74 | 1.5 | Good | ±2% | - | 0.00038 |
| Comparative Example 5 | 11 | 1078 | 6.7 | 20% | 81% | 20 | 72 | 2.6 | Good | ±2% | - | 0.00042 |
| Example 1 | 12.3 | 904 | 7.0 | 32% | 73% | 102 | 61 | 1.7 | Good | ±2% | Good | 0.00039 |
| Example 2 | 12.3 | 926 | 6.9 | 30% | 74% | 100 | 63 | 1.9 | Good | 12% | Good | 0.00039 |
| Example 3 | 12.3 | 940 | 6.9 | 28% | 75% | 92 | 70 | 2.0 | Good | ±2% | Good | 0.00040 |
| Example 4 | 12.2 | 958 | 6.8 | 26% | 76% | 85 | 77 | 2.1 | Good | ±2% | Good | 0.00040 |

**Claims**

1. A copolymer comprising tetrafluoroethylene (TFE) units and, based on the total of monomer units, 3.9-5.5 mass% of perfluoro(propyl vinyl ether) (PPVE) units, and which has a melt flow rate at 372°C of 2.8-4.0 g/10 min,determined according to the method defined in the description, and has a total number of -CF=CF$_2$, -CF$_2$H, -COF, -COOH, -COOCH$_3$, CONH$_2$ and -CH$_2$OH groups of $\leq$ 20 per 10$^6$ main-chain carbon atoms, determined according to the method defined in the description.

2. An extrusion formed article, comprising the copolymer of claim 1.

3. A blow molded article, comprising the copolymer according to claim 1.

4. A transfer molded article, comprising the copolymer of claim 1.

5. A coated electric wire, comprising a coating layer comprising the copolymer of claim 1.

6. A formed article, which comprises the copolymer of claim 1 and is a piping member, an electric wire coating, a tube, a film, or a member to be compressed.

**Patentansprüche**

1. Copolymer, umfassend Tetrafluorethylen- (TFE-) Einheiten und, bezogen auf die Gesamtmenge der Monomereinheiten, 3,9-5,5 Massen-% an Perfluor(propylvinylether)-(PPVE-) Einheiten, und das eine Schmelzflussrate bei 372°C von 2,8-4,0 g/10 min, bestimmt gemäß dem in der Beschreibung definierten Verfahren, aufweist, und eine Gesamtanzahl an -CF=CF$_2$, -CF$_2$H, -COF, -COOH, -COOCH$_3$, CONH$_2$ und -CH$_2$OH-Gruppen von $\leq$ 20 pro 10$^6$ Kohlenstoffatomen der Hauptkette, bestimmt gemäß dem in der Beschreibung definierten Verfahren, aufweist

2. Extrusionsgeformter Artikel, umfassend das Copolymer nach Anspruch 1.

3. Blasgeformter Artikel, umfassend das Copolymer nach Anspruch 1.

4. Spritzgepresster Artikel, umfassend das Copolymer nach Anspruch 1.

5. Beschichteter elektrischer Draht, der eine Beschichtungsschicht umfasst, die das Copolymer nach Anspruch 1 umfasst.

6. Geformter Artikel, der das Copolymer nach Anspruch 1 umfasst und ein Rohrleitungsbauteil, eine Beschichtung für elektrische Drähte, ein Rohr, eine Folie oder ein zu komprimierendes Bauteil ist.

**Revendications**

1. Copolymère comprenant des unités de tétrafluoroéthylène (TFE) et, par rapport au total d'unités monomères, de 3,9 à 5,5 % en masse d'unités de perfluoro (propyl vinyl éther) (PPVE), et qui présente un indice de fluidité à chaud à 372 °C de 2,8 à 4,0 g/10 min, déterminé selon le procédé défini dans la description, et présente un nombre total de groupes -CF=CF$_2$, -CF$_2$H, -COF, -COOH, -COOCH$_3$, -CONH$_2$ et -CH$_2$OH de $\leq$ 20 par 10$^6$ atomes de carbone de la chaîne principale, déterminé selon le procédé défini dans la description.

2. Article formé par extrusion, comprenant le copolymère selon la revendication 1.

3. Article moulé par soufflage, comprenant le copolymère selon la revendication 1.

4. Article moulé par transfert, comprenant le copolymère selon la revendication 1.

5. Fil électrique enrobé, comprenant une couche de revêtement comprenant le copolymère selon la revendication 1.

6. Article formé, qui comprend le copolymère selon la revendication 1 et qui est un élément de tuyauterie, un revêtement de fil électrique, un tube, un film, ou un organe devant être comprimé.

**EP 4 299 634 B1**

**REFERENCES CITED IN THE DESCRIPTION**

**Patent documents cited in the description**

- JP 2020 A
- JP 002341 A
- US 2015158988 A1
- US 2003013791 A1
- JP 2020015906 A